(19) **Europäisches Patentamt**
**European Patent Office**
**Office européen des brevets**

(11) **EP 3 936 830 B1**

(12) **EUROPÄISCHE PATENTSCHRIFT**

(45) Veröffentlichungstag und Bekanntmachung des Hinweises auf die Patenterteilung:
**09.08.2023 Patentblatt 2023/32**

(21) Anmeldenummer: **21180849.8**

(22) Anmeldetag: **22.06.2021**

(51) Internationale Patentklassifikation (IPC):
**G01D 5/38** *(2006.01)* **G01D 5/347** *(2006.01)*

(52) Gemeinsame Patentklassifikation (CPC):
**G01D 5/34794; G01D 5/38**

(54) **OPTISCHE POSITIONSMESSEINRICHTUNG**

OPTICAL POSITIONING DEVICE

DISPOSITIF OPTIQUE DE MESURE DE LA POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2020 DE 102020208423**

(43) Veröffentlichungstag der Anmeldung:
**12.01.2022 Patentblatt 2022/02**

(73) Patentinhaber: **Dr. Johannes Heidenhain GmbH 83301 Traunreut (DE)**

(72) Erfinder:
• HUBER, Walter
83278 Traunstein (DE)
• HÖFER, Volker
83349 Palling (DE)

(56) Entgegenhaltungen:
**EP-A2- 1 081 457 EP-A2- 1 111 345 DE-A1- 2 207 132**

**Beschreibung**

## GEBIET DER TECHNIK

Die vorliegende Erfindung betrifft eine optische Positionsmesseinrichtung zur Erfassung der Position von zwei Objekten, die relativ zueinander entlang einer Messrichtung beweglich angeordnet sind.

## STAND DER TECHNIK

Bekannte optische Positionsmesseinrichtungen zur Erfassung der Position von zwei zueinander beweglichen Objekten bestehen üblicherweise aus einem Maßstab mit einer Messteilung, der mit einem der beiden Objekte verbunden ist, sowie einer am anderen Objekt angeordneten Abtasteinheit. Die Abtasteinheit umfasst in der Regel eine Lichtquelle, eine Abtastplatte sowie eine geeignet ausgebildete Detektoranordnung. Auf der Abtastplatte sind optische Komponenten wie z.B. ein oder mehrere Abtastteilungen angeordnet. Die von der Lichtquelle emittierten Strahlenbündel beaufschlagen entlang des Abtaststrahlengangs den Maßstab sowie die mindestens eine Abtastteilung jeweils ein- oder mehrmals, bevor diese auf die Detektoranordnung auftreffen. Über die Detektoranordnung werden im Fall einer Relativbewegung von Maßstab und Abtasteinheit entlang der Messrichtung mehrere verschiebungsabhängig modulierte, phasenverschobene Abtastsignale erzeugt, die dann in einer Folgeelektronik weiterverarbeitbar sind.

Derartige Positionsmesseinrichtungen können z.B. in Werkzeugmaschinen eingesetzt werden, um die Relativposition von zueinander beweglichen Maschinenkomponenten zu erfassen. Insbesondere unter rauen Umgebungsbedingungen besteht dabei die Gefahr, dass die Messteilung auf dem Maßstab verschmutzt wird, beispielsweise durch Öl, Kühlmittel oder Abrieb. Im Fall solcher Verschmutzungen kann die Funktionsfähigkeit der Positionsmesseinrichtung beeinträchtigt werden.

Zur Minimierung der dabei entstehenden Probleme ist die sogenannte Einfeld-Abtastung bekannt geworden; hierzu sei z.B. auf die EP 767 359 A1 verwiesen. Dabei wird über geeignete optische Maßnahmen bzw. einem entsprechenden Abtast-Strahlengang sichergestellt, dass die phasenverschobenen Abtastsignale jeweils aus der Abtastung des gleichen Messteilungs-Bereichs erzeugt werden. Auf diese Art und Weise werden alle Abtastsignale gleichermaßen durch eventuelle Verschmutzungen beeinflusst, was die weitere Signalverarbeitung weniger beeinträchtigt als etwa eine ungleichmäßige, verschmutzungsbedingte Beeinflussung einzelner Abtastsignale.

Keine reine Einfeld-Abtastung liegt hingegen üblicherweise bei sogenannten Vernier-Abtastungen vor, die in optischen Positionsmesseinrichtungen oftmals zur Signalerzeugung verwendet werden; diesbezüglich sei etwa auf die EP 1 081 457 A2 verwiesen. Derartige Vernier-Abtastungen zeichnen sich dadurch aus, dass die Messteilung und die verwendeten Abtastteilungen geringfügig verschiedene Periodizitäten besitzen und aus der Wechselwirkung der von einer Lichtquelle emittierten Strahlenbündel mit den verschiedenen Teilungen im Abtaststrahlengang ein periodisches Vernier-Streifenmuster in einer Detektionsebene erzeugt wird. Im Fall der Verschmutzung der Messteilung oder bei lokalen Messteilungsdefekten resultiert in solchen Systemen eine ungleichmäßige Beeinflussung der erzeugten Abtastsignale. Dies hat wiederum Fehler bei der Weiterverarbeitung und insbesondere bei der damit erfolgenden Positionsbestimmung zur Folge.

## ZUSAMMENFASSUNG DER ERFINDUNG

Der vorliegenden Erfindung liegt die Aufgabe zugrunde, eine optische Positionsmesseinrichtung basierend auf einer Vernier-Abtastung zu schaffen, die möglichst unempfindlich gegenüber Verschmutzungen der Messteilung ist.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung zur Erfassung der Position von zwei Objekten, die relativ zueinander entlang einer Messrichtung beweglich angeordnet sind, umfasst einen Maßstab, der mit einem der beiden Objekte verbunden ist und eine Abtasteinheit, die mit dem anderen der beiden Objekte verbunden ist. Der Maßstab weist eine sich entlang der Messrichtung erstreckende Messteilung auf, die eine bestimmte Messteilungsperiodizität besitzt. Die Abtasteinheit umfasst mindestens eine Lichtquelle, eine Abtastplatte sowie mindestens zwei Detektoranordnungen. Hierbei weist die Abtastplatte mindestens zwei Abtastteilungen auf, die senkrecht zur Messrichtung benachbart zueinander auf einer Seite der Abtastplatte angeordnet sind und jeweils eine bestimmte Abtastteilungsperiodizität besitzen, die sich von der Messteilungsperiodizität unterscheidet. Ferner sind mindestens zwei richtungsselektive Ablenkelemente vorgesehen, die den mindestens zwei Abtastteilungen zugeordnet sind und eine Ablenkung von den durch die verschiedenen Abtastteilungen tretenden Strahlenbündeln in Richtung eines gemeinsam beaufschlagten Teilbereichs auf der Messteilung bewirken. Auf die mindestens zwei Detektoranordnungen, die in Richtung einer Senkrechten zur Messrichtung benachbart zueinander angeordnet sind, treffen die vom gleichen beaufschlagten Teilbereich auf der Messteilung her einfallenden Strahlenbündel jeweils in Form eines periodischen Vernier-Streifenmusters auf, das eine Streifenmusterperiodizität besitzt. Die Detektoranordnungen umfassen jeweils eine Mehrzahl von lichtempfindlichen Detektorelementen, die periodisch entlang der Messrichtung angeordnet sind, so dass über die Detektoranordnungen eine Umwandlung der Vernier-Streifenmuster in elektrische Ausgangssignale erfolgt, die zu zwei oder mehr phasenverschobenen Abtastsignalen weiterverarbeitet werden.

Dabei ist möglich, dass

- die Detektorelemente der Detektoranordnungen jeweils rechteckförmig ausgebildet sind und die Rechtsecks-Längsachse jeweils parallel zur Senkrechten zur Messrichtung orientiert ist, und
- die Detektorelemente entlang der Senkrechten zur Messrichtung fluchtend zueinander angeordnet sind.

Es können die jeweils entlang der Senkrechten zur Messrichtung benachbart angeordneten Detektorelemente der beiden Detektoranordnungen elektrisch miteinander verschaltet sein.

Mit Vorteil ist vorgesehen, dass

- die Abtasteinheit zwei Detektoranordnungen umfasst, und
- innerhalb einer Periode des abgetasteten Vernier-Streifenmusters jeweils eine Detektorgruppe mit vier identisch ausgebildeten Detektorelementen entlang der Messrichtung angeordnet ist, wobei entlang der Messrichtung jeweils mehrere Detektorgruppen in jeder Detektoranordnung angeordnet sind, und
- wobei die vier Detektorelemente einer Detektorgruppe der ersten Detektoranordnung im Fall der Relativbewegung von Maßstab und

**Fortsetzung: Ursprüngliche Seite 5**

Abtasteinheit jeweils periodische Ausgangssignale mit den Phasenlagen 180°, 270°, 0°, 90° liefern, und

- wobei die vier Detektorelemente einer Detektorgruppe der zweiten Detektoranordnung im Fall der Relativbewegung von Maßstab und Abtasteinheit jeweils periodische Ausgangssignale mit den Phasenlagen 0°, 90°, 180°, 270° liefern, und
- zur Gewinnung eines ersten verschiebungsabhängigen Abtastsignals die folgenden Detektorelemente benachbarter Detektorgruppen der beiden Detektoranordnungen elektrisch miteinander verschaltet sind:
  drittes Detektorelement der ersten Detektoranordnung, erstes Detektorelement der zweiten Detektoranordnung, erstes Detektorelement der ersten Detektoranordnung, drittes Detektorelement der zweiten Detektoranordnung, und
- zur Gewinnung eines zweiten verschiebungsabhängigen Abtastsignals, das um 90° gegenüber dem ersten Abtastsignal phasenverschoben ist, die folgenden Detektorelemente benachbarter Detektorgruppen der beiden Detektoranordnungen elektrisch miteinander verschaltet sind:
  viertes Detektorelement der ersten Detektoranordnung, zweites Detektorelement der zweiten Detektoranordnung, zweites Detektorelement der ersten Detektoranordnung, viertes Detektorelement der zweiten Detektoranordnung.

Ferner können die Abtastteilungen jeweils als gemischte Amplituden-Phasen-Gitter ausgebildet sein, die aus in Messrichtung alternierend angeordneten periodischen Amplituden- und Phasenstrukturen bestehen und auf der dem Maßstab zugewandten Seite der Abtastplatte angeordnet sind.

Dabei kann vorgesehen sein, dass

- die Amplitudenstrukturen durchlässige und undurchlässige Teilungsbereiche umfassen, und
- die Phasenstrukturen jeweils identisch ausgebildete, durchlässige Teilungsbereiche mit einer phasenschiebenden optischen Wirkung umfassen. Hierbei ist möglich, dass
- die Abtastteilungen jeweils aus einer Mehrzahl von entlang der Messrichtung periodisch mit der Abtastteilungsperiodizität angeordneten Abtastteilungs-Elementarzellen bestehen, und
- eine Abtastteilungs-Elementarzelle entlang der Messrichtung einen ersten undurchlässigen Teilungsbereich, einen durchlässigen Teilungsbereich, einen zweiten undurchlässigen Teilungsbereich sowie einen phasenschiebenden Teilungsbereich umfasst, und
- benachbarte undurchlässige Teilungsbereiche im Abstand der halben Abtastteilungsperiodizität und benachbarte durchlässige Teilungsbereiche sowie benachbarte phasenschiebende Teilungsbereiche im Abstand der Abtastteilungsperiodizität zueinander angeordnet sind.

Desweiteren ist dabei möglich, dass die Abtastteilungsperiodizität jeweils gemäß

$$TP_A = 2 / (1/TP_M +/- 1/ SP)$$

gewählt ist, mit
$TP_A$ := Abtastteilungsperiodizität
$TP_M$ := Messteilungsperiodizität
$SP$ := Streifenmusterperiodizität

Es ist weiterhin möglich, dass

- die Abtastteilungen jeweils identisch ausgebildet sind, und
- die Abtastteilungen entlang einer Senkrechten zur Messrichtung benachbart zueinander auf der Abtastplatte angeordnet sind, und

- benachbarte Abtastteilungen entlang der Messrichtung um den Versatzbetrag $TP_A/2$ oder $TP_A/4$ versetzt zueinander auf der Abtastplatte angeordnet sind, wobei $TP_A$ die Abtastteilungsperiodizität angibt.

Vorzugsweise sind die richtungsselektiven Ablenkelemente in der Abtasteinheit im Bereich zwischen der Lichtquelle und der Abtastplatte angeordnet.

Dabei können die richtungsselektiven Ablenkelemente auf der der Lichtquelle zugewandten Seite der Abtastplatte angeordnet und als mehrstufige, geblazte Phasengitter ausgebildet sein.

Mit Vorteil ist vorgesehen, dass

- als richtungsselektive Ablenkelemente zwei Phasengitter jeweils als vierstufige geblazte Phasengitter ausgebildet und entlang einer Senkrechten zur Messrichtung benachbart zueinander auf der Abtastplatte angeordnet sind und zwischen denen sich ein absorbierender Teilbereich auf der Abtastplatte befindet, und
- die beiden Phasengitter eine entgegengesetzte Orientierung des stufenförmigen Profilverlaufs zueinander aufweisen.

Alternativ ist auch möglich, dass die richtungsselektiven Ablenkelemente

- als refraktive Prismenkeile ausgebildet sind, oder
- als Mehrsegmentlinse ausgebildet sind, deren Segmente zueinander geneigte optische Achsen aufweisen.

Als besonderer Vorteil der erfindungsgemäßen optischen Positionsmesseinrichtung resultieren stabile Abtastsignale auch bei einer lokal verschmutzten Messteilung oder im Fall von lokalen Messteilungsdefekten. Die Amplituden und Offsets der phasenverschobenen Abtastsignale der erfindungsgemäßen optischen Positionsmesseinrichtung verändern sich aufgrund der nunmehr vorgesehenen Einfeld-Abtastung auch in derartigen Fällen in gleichartiger Art und Weise, d.h. es ergeben sich keine größeren Amplitudenverhältnis- und Tastverhältnisschwankungen in den verschiedenen Abtastsignalen und damit kein zusätzlicher Positionsfehler.

Weitere Einzelheiten und Vorteile der vorliegenden Erfindung seien anhand der nachfolgenden Beschreibung von Ausführungsbeispielen der erfindungsgemäßen optischen Positionsmesseinrichtung in Verbindung mit den Figuren erläutert.

## KURZE BESCHREIBUNG DER ZEICHNUNGEN

Es zeigt

Figur 1      eine schematische Schnittansicht eines Ausführungsbeispiels der erfindungsgemäßen optischen Positionsmesseinrichtung;

Figur 2      eine Ansicht der Abtastplatten-Unterseite des Ausführungsbeispiels aus Figur 1 mit den darauf angeordneten Abtastteilungen;

Figur 3      eine Ansicht der Abtastplatten-Oberseite des Ausführungsbeispiels aus Figur 1 mit den darauf angeordneten richtungsselektiven Ablenkelementen;

Figur 4      eine Teil-Schnittansicht der Abtastplatte des Ausführungsbeispiels aus Figur 1;

Figur 5      eine Draufsicht auf die Detektionsebene des Ausführungsbeispiels aus Figur 1 mit den beiden Detektoranordnungen.

## BESCHREIBUNG DER AUSFÜHRUNGSFORMEN

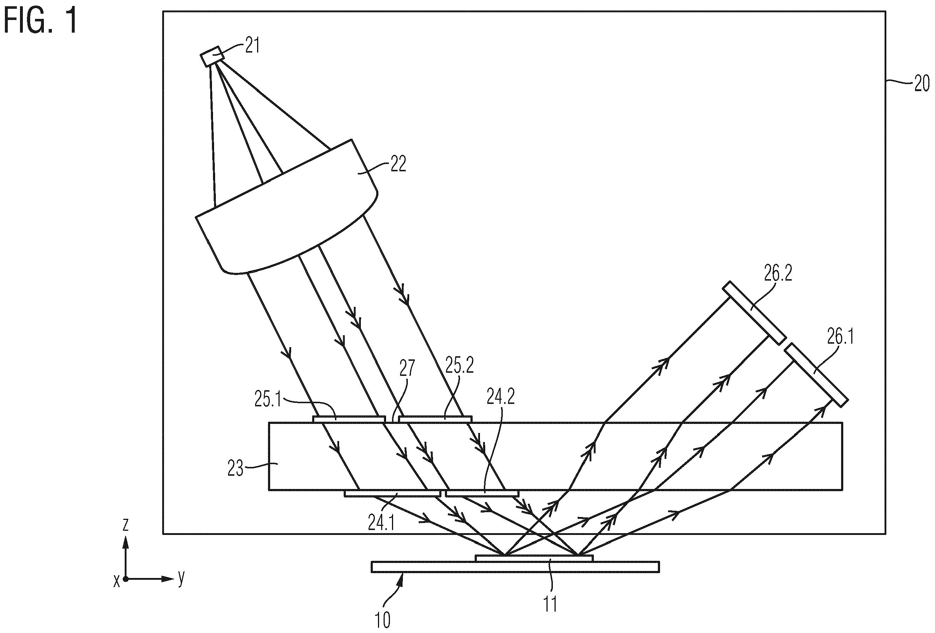

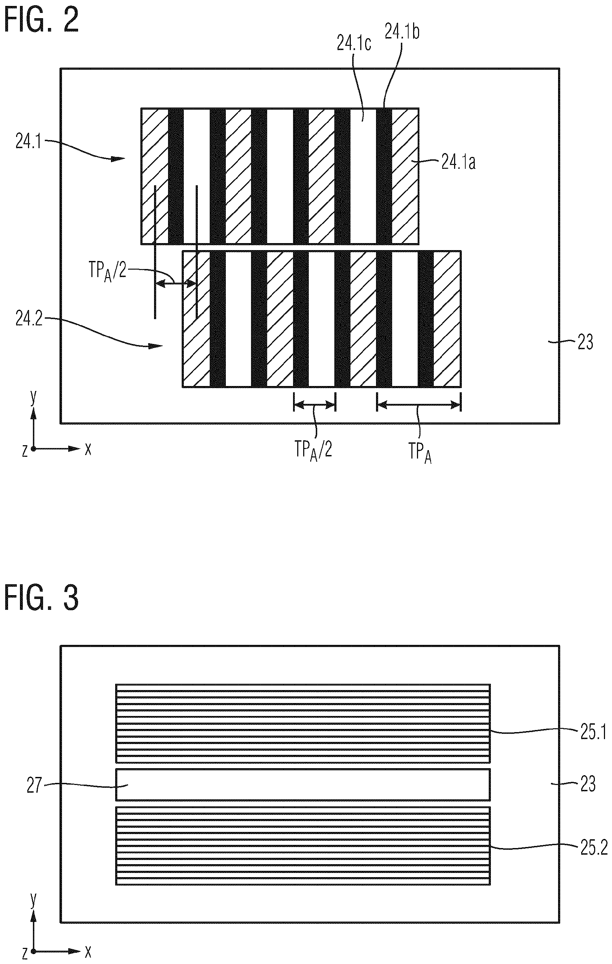

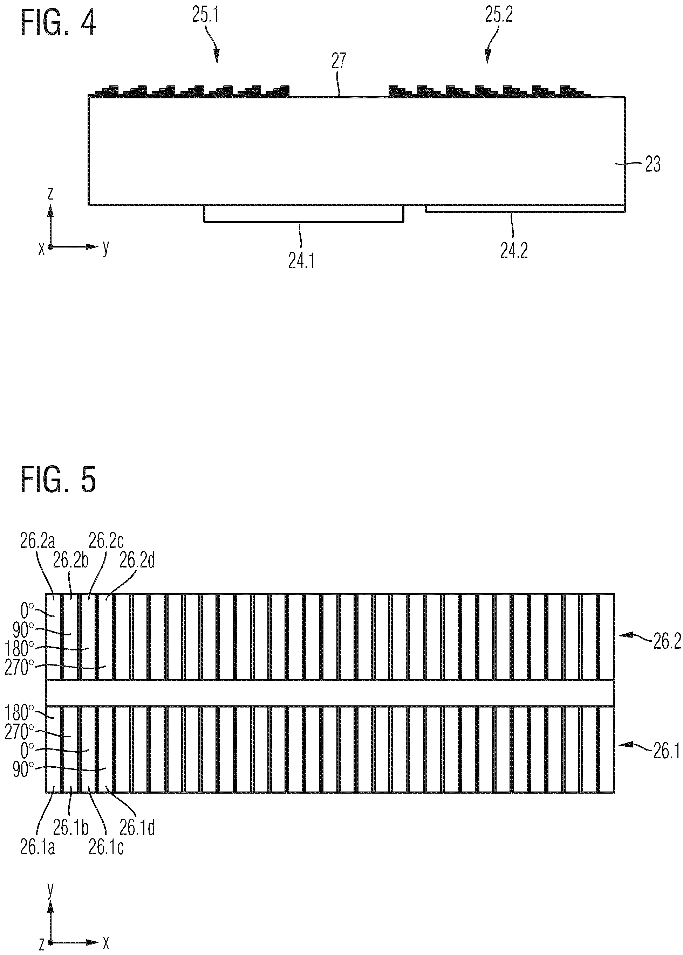

Ein Ausführungsbeispiel der erfindungsgemäßen optischen Positionsmesseinrichtung wird nachfolgend anhand der Figuren 1 - 5 erläutert. Dabei zeigt Figur 1 eine Schnittansicht zur Beschreibung des Abtaststrahlengangs, die Figuren 2, 3 und 4 Ansichten der Ober- und Unterseite der Abtastplatte sowie eine Teil-Schnittansicht derselbigen und Figur 5 eine Draufsicht auf die Detektionsebene.

Die dargestellte Positionsmesseinrichtung dient zur Erfassung der Position von zwei Objekten, die entlang mindestens einer Messrichtung x beweglich zueinander angeordnet sind. Im vorliegenden Beispiel ist eine Relativbeweglichkeit der Objekte entlang einer linear verlaufenden Messrichtung x vorgesehen, d.h. die erfindungsgemäße optische Positionsmesseinrichtung ist hier als Längenmessgerät ausgebildet. Die zueinander beweglichen Objekte sind in den Figuren nicht gezeigt, es kann sich dabei z.B. um zwei zueinander bewegliche Maschinenkomponenten handeln. Mit Hilfe der von der Positionsmesseinrichtung erzeugten verschiebungsabhängigen Abtastsignale kann über eine nachgeordnete Maschinensteuerung die Bewegung der beiden Maschinenkomponenten gesteuert werden. Mit einem der beiden Objekte ist hierbei ein Maßstab 10 der Positionsmesseinrichtung verbunden, mit dem anderen Objekt eine Abtasteinheit 20 der Positionsmesseinrichtung.

Der Maßstab 10, hier ausgebildet als Linear-Maßstab, weist eine sich entlang der Messrichtung x erstreckende Messteilung 11 auf, die auf einem geeigneten Trägerkörper angeordnet ist. Die gitterförmige Messteilung 11 besteht aus Teilungsbereichen mit unterschiedlichen optischen Wirkungen, die entlang der Messrichtung x periodisch mit einer Messteilungsperiodizität $TP_M$ angeordnet sind. Die Messteilungsperiodizität $TP_M$ gibt dabei die Breite zweier benachbarter Teilungsbereiche mit unterschiedlichen optischen Eigenschaften entlang der Messrichtung x an. In einem möglichen Ausführungsbeispiel ist eine Messteilungsperiodizität $TP_M = 20\mu m$

vorgesehen.

Das vorliegende Ausführungsbeispiel der erfindungsgemäßen optischen Positionsmesseinrichtung ist als Auflicht-System ausgebildet. Dies bedeutet für die Ausbildung der Messteilung 11, dass diese als Reflexions-Messteilung ausgebildet ist und verschiedene Teilungsbereiche mit unterschiedlichen Reflexionseigenschaften besitzt, also z.B. gering- und hoch-reflektierende Teilungsbereiche. Alternativ kann auch eine unterschiedliche phasenschiebende Wirkung der reflektierenden Teilungsbereiche der Messteilung 11 vorgesehen sein.

Auf Seiten der Abtasteinheit 20 sind in der erfindungsgemäßen optischen Positionsmesseinrichtung eine Lichtquelle 21 mit einer vorgeordneten Kollimationsoptik 22, eine Abtastplatte 23 sowie zwei Detektoranordnungen 26.1, 26.2 vorgesehen. Dabei wird über die Kollimationsoptik 22 das von der Lichtquelle 21 emittierte Strahlenbündel kollimiert und gelangt dann auf die Abtastplatte 23, in der bestimmte strukturierte, optisch wirksame Bereiche durchlaufen werden, ehe die Messteilung 11 auf dem Maßstab 10 beaufschlagt wird. Von dort resultiert eine Rückreflexion in Richtung der Abtasteinheit 20, wo anschließend erneut die Abtastplatte 23 in nichtstrukturierten Bereichen durchlaufen wird. Aufgrund der Wechselwirkung der Strahlenbündel mit den strukturierten Bereichen der Abtastplatte 23 und der Messteilung 11 resultieren in der Detektionsebene der beiden Detektoranordnungen 26.1, 26.2 sogenannte Vernier-Streifenmuster.

Auf derjenigen Seite der Abtastplatte 23, die dem Maßstab 10 zugewandt ist, sind im dargestellten Ausführungsbeispiel senkrecht zur Messrichtung x benachbart zueinander zwei Abtastteilungen 24.1, 24.2 bzw. Abtastgitter in den strukturierten bzw. optisch wirksamen Bereichen angeordnet, die beim erstmaligen Durchtreten der Abtastplatte 23 durchlaufen werden. Die Abtastteilungen 24.1, 24.2 bestehen jeweils aus Teilungsbereichen mit unterschiedlichen optischen Wirkungen, die periodisch mit einer Abtastteilungsperiodizität $TP_A$ entlang der Messrichtung x angeordnet sind. Die Abtastteilungsperiodizität $TP_A$ unterscheidet sich dabei von der Messteilungsperiodizität $TP_M$ in einer vorgegebenen Art und Weise; im Ausführungsbeispiel mit der oben angegeben Messteilungsperiodizität $TP_M = 20\mu m$ ist etwa eine Abtastteilungsperiodizität $TP_A = 39,02439\mu m$ vorgesehen. Weitere Details der Abtastteilungen 24.1, 24.2 werden im Verlauf der Beschreibung noch näher erläutert.

Auf der entgegengesetzten Seite der Abtastplatte 23, die der Lichtquelle 21 zugewandt ist, sind im vorliegenden Ausführungsbeispiel in strukturierten, optisch wirksamen Bereichen zwei richtungsselektive Ablenkelemente 25.1, 25.2 angeordnet, die den beiden Abtastteilungen 24.1, 24.2 zugeordnet sind. Die Ablenkelemente 25.1, 25.2 bewirken, dass die durch die verschiedenen Abtastteilungen 24.1, 24.2 tretenden Strahlenbündel so abgelenkt werden, dass diese einen gemeinsamen Teilbereich auf der Messteilung 11 beaufschlagen. Darüber ist gewährleistet, dass die erzeugten Abtastsignale allesamt aus der Abtastung des gleichen Teilbereichs der Messteilung 11 stammen; eine verschmutzungsunempfindliche Einfeld-Abtastung kann damit gewährleistet werden.

Aus der Wechselwirkung der von der Lichtquelle 21 emittierten Strahlenbündel mit den richtungsselektiven Ablenkelementen 25.1, 25.2, den Abtastteilungen 24.1, 24.2 und dem beaufschlagten Teilbereich der Messteilung 11 resultieren in der Detektionsebene der beiden Detektoranordnungen 26.1, 26.2 jeweils die periodischen Vernier-Streifenmuster. Diese besitzen die gleiche Streifenmusterperiodizität SP, unterscheiden sich aufgrund der Relativanordnung der beiden Abtastteilungen 24.1, 24.2 auf der Abtastplatte 23 aber in ihrer relativen Phasenlage voneinander. Bei einer Wahl der Abtastteilungs- und Messteilungsperiodizitäten $TP_A$, $TP_M$ wie oben angegeben beträgt die Streifenmusterperiodizität SP = $800\mu m$. Über die zwei Detektoranordnungen 26.1, 26.2 werden die beiden Vernier-Streifenmuster in elektrische Ausgangssignale umgewandelt, die zu zwei oder mehr phasenverschobenen Abtastsignalen weiterverarbeitet werden. Die beiden Detektoranordnungen umfassen hierzu jeweils eine Mehrzahl von lichtempfindlichen Detektorelementen, die periodisch entlang der Messrichtung x angeordnet und in geeigneter Art und Weise miteinander elektrisch verschaltet sind.

Anhand der Figuren 2, 3 und 4 wird nachfolgend die Ausbildung der Abtastplatte 23 mit den darauf angeordneten Komponenten näher erläutert.

Figur 2 zeigt hierbei eine Draufsicht auf die Abtastplatten-Unterseite, die dem Maßstab zugewandt ist und auf der die beiden Abtastteilungen 24.1, 24.2 angeordnet sind. Die beiden Abtastteilungen 24.1, 24.2 sind im vorliegenden Ausführungsbeispiel als gemischte Amplituden-Phasen-Gitter ausgebildet und bestehen aus in Messrichtung x alternierend angeordneten, periodischen Amplituden- und Phasenstrukturen. Die Amplitudenstrukturen umfassen dabei undurchlässige Teilungsbereiche 24.1b und durchlässige Teilungsbereiche 24.1c. Die Phasenstrukturen bestehen aus jeweils identisch ausgebildeten Teilungsbereichen 24.1a mit einer definierten phasenschiebenden optischen Wirkung auf die durchtretenden Strahlenbündel. Im Zusammenhang mit derartigen gemischten Amplituden-Phasen-Gittern sei ergänzend auf die bereits eingangs erwähnte EP 1 081 457 A2 verwiesen.

Die Abtastteilungsperiodizität $TP_A$ gibt im Fall einer derartigen Ausgestaltung der Abtastteilungen 24.1, 24.2 wie aus Figur 2 ersichtlich die Breite von vier aufeinanderfolgenden Teilungsbereichen einer Abtastteilungs-Elementarzelle entlang der Messrichtung x an, nämlich von links aus einem ersten undurchlässigen Teilungsbereich 24.1b, einem durchlässigen Teilungsbereich 24.1c, einem zweiten undurchlässigen Teilungsbereich 24.1b und einem Teilungsbereich 24.1a mit einer definierten phasenschiebenden Wirkung. $TP_A/2$ bezeichnet hierbei innerhalb einer derart ausgestalteten Abtastteilung 24.1 oder 24.2 mit zwei undurchlässigen Teilungsbereichen 24.1b pro Abtastteilungs-Elementarzelle den Abstand zwischen aufeinanderfolgenden undurchlässigen Teilungsbereichen 24.1b, der demzufolge der halben Abtastteilungsperiodizität entspricht. TP$_A$ gibt bei derartigen Abtastteilungen 24.1, 24.2 den Abstand benachbarter phasenschiebender Teilungsbereiche 24.1a bzw. den Abstand benachbarter durchlässiger Teilungsbereiche 24.1c an und entspricht damit der Abtastteilungsperiodizität. Die vollständige Abtastteilung 24.1 bzw. 24.2 setzt sich jeweils aus einer periodischen Aneinanderreihung derartiger Abtastteilungs-Elementarzellen entlang der Messrichtung x mit der Abtastteilungsperiodizität TP$_A$ zusammen.

Um über die optische Wechselwirkung der Strahlenbündel mit den durchlaufenen bzw. beaufschlagten optischen Strukturen im Strahlengang auf den beiden Detektoranordnungen periodische Vernier-Streifenmuster mit einer gewünschten Streifenmusterperiodizität SP zu erzeugen, ist es erforderlich, die Abtastteilungsperiodizität TP$_A$ in einer bestimmten Art und Weise zu dimensionieren. Die erforderliche Abtastteilungsperiodizität TP$_A$ ergibt sich bei einer vorgegebenen Messteilungsperiodizität TP$_M$ und einer gewünschten Streifenmusterperiodizität SP im Fall derartig ausgebildeter Abtastteilungen 24.1, 24.2 in allgemeiner Form gemäß der nachfolgenden Beziehung:

$$TP_A = 2 \ / \ (1/TP_M \ +/- \ 1/SP)$$

mit

TP$_A$ := Abtastteilungsperiodizität
TP$_M$ := Messteilungsperiodizität
SP := Streifenmusterperiodizität

Alternativ zum oben erwähnten Dimensionierungsbeispiel mit einer Abtastteilungsperiodizität TP$_A$ könnte gemäß dieser Beziehung demnach auch die Abtastteilungsperiodizität TP$_A$ = 41,02564 μm gewählt werden.

Wie weiterhin aus Figur 2 ersichtlich, sind beiden Abtastteilungen 24.1, 24.2 identisch ausgebildet und entlang einer Senkrechten y zur Messrichtung x benachbart zueinander auf der Abtastplatte 23 bzw. der Abtastplatten-Unterseite angeordnet. Dabei ist entlang der Messrichtung x im vorliegenden Ausführungsbeispiel ein Versatzbetrag TP$_A$/2 zwischen den beiden benachbarten Abtastteilungen 24.1, 24.2 vorgesehen. Dies hat zur Folge, dass die beiden erzeugten Vernier-Streifenmuster in der Detektionsebene der Detektoranordnungen 26.1, 26.2 einen relativen Phasenversatz von 180° zueinander aufweisen.

Figur 3 zeigt eine Draufsicht auf die Abtastplatten-Oberseite, die der Lichtquelle zugewandt ist und auf der in diesem Ausführungsbeispiel die beiden richtungsselektiven Ablenkelemente 25.1, 25.2 angeordnet sind. Diese sind hier als mehrstufige geblazte Phasengitter ausgebildet. Dies bedeutet, dass die entsprechenden Phasengitter derart optimiert sind, dass deren Beugungseffizienz für eine bestimmte Beugungsordnung maximal wird, während die Beugungseffizienz für die anderen Beugungsordnungen minimiert ist. Konkret sind hierbei zwei vierstufige, geblazte Phasengitter vorgesehen, die entlang einer Senkrechten y zur Messrichtung x benachbart zueinander auf der Abtastplatte 23 angeordnet sind; zwischen den beiden geblazten Phasengittern ist auf der Abtastplatte 23 ein absorbierender Teilbereich 27 ausgebildet. Wie ferner aus der Teil-Schnittansicht der Abtastplatte in Figur 4 ersichtlich, weisen die beiden geblazten Phasengitter der Ablenkelemente 25.1, 25.2 eine entgegengesetzte Orientierung des stufenförmigen Profilverlaufs auf. Darüber wird die erforderliche Ablenkwirkung auf die durchtretenden Strahlenbündel sichergestellt, so dass diese einen gemeinsamen Teilbereich auf der Messteilung beaufschlagen.

Eine Draufsicht auf die Detektionsebene mit den beiden Detektoranordnungen 26.1, 26.2 ist in Figur 5 dargestellt. Wie daraus ersichtlich, sind die Detektoranordnungen 26.1, 26.2 in Richtung einer Senkrechten y zur Messrichtung x benachbart zueinander in der Abtasteinheit angeordnet. Die beiden Detektoranordnungen 26.1, 26.2 bestehen jeweils aus einer Mehrzahl von lichtempfindlichen Detektorelementen 26.1a...26.1d, 26.2a...26.2d, die periodisch entlang der Messrichtung x angeordnet sind; derartige Detektoranordnungen werden auch als strukturierte FotoDetektoren bezeichnet. Als lichtempfindliche Detektorelemente 26.1a...26.1d, 26.2a...26.2d kommen hierbei Photodioden in Betracht, deren lichtempfindliche Flächen rechteckförmig ausgebildet sind. Die Rechtecks-Längsachse ist hierbei jeweils parallel zur Senkrechten y zur Messrichtung x orientiert. Im dargestellten Ausführungsbeispiel sind die Detektorelemente 26.1a...26.1d, 26.2a...26.2d der beiden Detektoranordnungen 26.1, 26.2 ferner entlang der Senkrechten y zur Messrichtung x fluchtend zueinander angeordnet. Dabei sind die jeweils benachbarten Detektorelemente 26.1a...26.1d, 26.2a...26.2d aus den beiden Detektoranordnungen 26.1, 26.2 elektrisch miteinander verschaltet.

Die Dimensionierung der beiden Detektoranordnungen 26.1, 26.2 erfolgt im vorliegenden Ausführungsbeispiel derart, dass innerhalb einer Periode der damit abgetasteten Vernier-Streifenmuster jeweils eine Detektorgruppe, bestehend aus vier identischen Detektorelementen 26.1a...26.1d, 26.2a...26.2d, vorgesehen wird. Entlang der Messrichtung x umfasst eine Detektoranordnung 26.1, 26.2 dann jeweils eine Mehrzahl derartiger Detektorgruppen. Hierbei wird die Anzahl von Detektorgruppen in der jeweiligen Detektoranordnung 26.1, 26.2 an die Anzahl von Perioden im erzeugten Vernier-Streifenmuster angepasst.

In der ersten Detektoranordnung 26.1 liefern die vier Detektorelemente 26.1a...26.1d einer Detektorgruppe im Fall der Relativbewegung von Maßstab und Abtasteinheit und der Abtastung des dabei resultierenden Vernier-Streifenmusters jeweils periodische Ausgangssignale mit den Phasenlagen 180°, 270°, 0°, 90°; d.h. das von links aus jeweils erste Detektorelement einer Detektorgruppe liefert das 180°-Ausgangssignal, das zweite Detektorelement liefert das 270°-Ausgangssignal usw..

In der zweiten Detektoranordnung 26.2 resultieren aus der Abtastung des phasenverschobenen Vernier-Streifenmusters dann wie aus Figur 5 ersichtlich in einer Detektorgruppe periodische Ausgangssignale mit den Phasenlagen 0°, 90°, 180°, 270°.

Um aus den derart erzeugten Ausgangssignalen der Detektorelemente 26.1a...26.1d, 26.2a...26.2d zwei verschiebungsabhängige, um 90° phasenverschobene Abtastsignale SIN, COS zu erzeugen, müssen die Detektorelemente 26.1a...26.1d, 26.2a...26.2d der beiden Detektoranordnungen in einer definierten Art und Weise miteinander elektrisch verschaltet werden. So ist zur Erzeugung eines ersten Abtastsignals SIN vorgesehen, dass die nachfolgend aufgeführten Detektorelemente 26.1a...26.1d, 26.2a...26.2d benachbarter Detektorgruppen aus den beiden Detektoranordnungen 26.1, 26.2 jeweils elektrisch miteinander verschaltet sind: drittes Detektorelement (26.1c) der ersten Detektoranordnung (26.1), erstes Detektorelement (26.2a) der zweiten Detektoranordnung (26.2), erstes Detektorelement (26.1a) der ersten Detektoranordnung (26.1), drittes Detektorelement (26.2c) der zweiten Detektoranordnung (26.2)

Das zweite, hierzu um 90° phasenversetzte Abtastsignal COS wird in der erfindungsgemäßen Positionsmesseinrichtung erzeugt, indem die nachfolgend aufgeführten Detektorelemente 26.1a...26.1d, 26.2a...26.2d benachbarter Detektorgruppen aus den beiden Detektoranordnungen 26.1, 26.2 jeweils elektrisch miteinander verschaltet werden: viertes Detektorelement (26.1d) der ersten Detektoranordnung (26.1), zweites Detektorelement (26.2b) der zweiten Detektoranordnung (26.2), zweites Detektorelement (26.1b) der ersten Detektoranordnung (26.1), viertes Detektorelement (26.2d) der zweiten Detektoranordnung (26.2)

Die auf dieser Art und Weise erzeugten Abtastsignale SIN, COS können dann in einer der Positionsmesseinrichtung nachgeordneten Folgeelektronik in bekannter Art und Weise weiterverarbeitet werden.

Neben den erläuterten Ausführungsbeispielen gibt es im Rahmen der vorliegenden Erfindung selbstverständlich noch weitere Ausgestaltungsmöglichkeiten.

So ist es möglich, die erfindungsgemäße optische Positionsmesseinrichtung auch zur Erfassung von rotatorischen Relativbewegungen zweier Objekte auszubilden. In diesem Fall wäre eine kreisringförmige Messteilung bzw. eine Radialteilung erforderlich, deren Zentrum die Rotationsachse darstellt.

Zur Erfassung rotatorischer Relativbewegungen kann auch eine sogenannte Trommelabtastung realisiert werden. Dabei wird die Messteilung z.B. auf einem Band angeordnet, das über den Umfang einer um eine Rotationsachse rotierenden Trommel angebracht und von einer demgegenüber stationären Abtasteinheit abgetastet wird.

Anstelle der erläuterten Auflicht-Variante kann selbstverständlich auch eine Durchlicht-Variante der erfindungsgemäßen Positionsmesseinrichtung realisiert werden. Hierzu wäre die Messteilung dann als Transmissions-Messteilung auszubilden, die aus alternierend angeordneten Teilungsbereichen mit unterschiedlicher optischer Durchlässigkeit besteht.

Ferner können auch mehr als zwei Abtastteilungen auf der Abtastplatte vorgesehen werden. So ist auch möglich, vier Abtastteilungen auf der Abtastplatte anzuordnen, die dann jeweils um einen Versatzbetrag $TP_A/4$ entlang der Messrichtung versetzt zueinander auf der Abtastplatte platziert sind. Den vier Abtastteilungen wären in diesem Fall dann auch vier richtungsselektive Ablenkelemente zuzuordnen und detektionsseitig vier Detektoranordnungen vorzusehen. Aus der geeigneten Verschaltung der Detektorelemente der vier Detektoranordnungen können dann wiederum die beiden um 90° phasenverschobenen Abtastsignale SIN, COS erzeugt und zur Weiterverarbeitung bereitgestellt werden.

Die Abtastteilungen können nicht nur in der oben erläuterten Form als gemischte Amplituden-Phasen-Gitter ausgebildet werden; alternativ ist auch die Verwendung von Amplitudengittern als Abtastteilung möglich. In diesem Fall wäre die Abtastteilungsperiodizität $TP_A$ dann folgendermaßen zu wählen:

$$TP_A = 1 / (1/TP_M +/- 1/SP),$$

mit

$TP_A$ := Abtastteilungsperiodizität
$TP_M$ := Messteilungsperiodizität
$SP$ := Streifenmusterperiodizität

Im oben erläuterten Ausführungsbeispiel waren die richtungsselektiven Ablenkelemente auf der Abtastplatte angeordnet. Dies ist in der erfindungsgemäßen optischen Positionsmesseinrichtung aber nicht zwingend erforderlich. Grundsätzlich könnten diese Ablenkelemente auch anderweitig im Bereich zwischen der Lichtquelle und der Abtastplatte angeordnet werden. Möglich wäre z.B., dass die optische Funktionalität der Ablenkelemente in die Kollimationsoptik integriert und diese dann als Mehrsegmentlinse ausgebildet wird, die in diesem Bereich angeordnet ist. Eine derartige Mehrsegmentlinse besitzt Segmente mit zueinander geneigten optischen Achsen, so dass darüber die erforderliche Ablenkung der durchlaufenden Strahlenbündel erfolgen kann.

Desweiteren wäre es möglich, die richtungsselektiven Ablenkelemente nicht als diffraktive Strukturen in Form von geblazten Phasengittern auszubilden, sondern hierfür refraktive Prismenkeile vorzusehen, die auf der Abtastplatte angeordnet werden usw..

**Patentansprüche**

1. Optische Positionsmesseinrichtung zur Erfassung der Position von zwei Objekten, die relativ zueinander entlang einer Messrichtung (x) beweglich angeordnet sind, mit

    - einem Maßstab (10), der mit einem der beiden Objekte verbunden ist und eine sich entlang der Messrichtung (x) erstreckende Messteilung (11) mit einer bestimmten Messteilungsperiodizität (TP$_M$) aufweist, und
    - einer mit dem anderen Objekt verbundenen Abtasteinheit (20), mit

        - mindestens einer Lichtquelle (21),
        - mindestens einer Abtastplatte (23) mit mindestens zwei Abtastteilungen (24.1, 24.2), die senkrecht zur Messrichtung (x) benachbart zueinander auf einer Seite der Abtastplatte (23) angeordnet sind und jeweils eine bestimmte Abtastteilungsperiodizität (TP$_A$) aufweisen, die sich von der Messteilungsperiodizität (TP$_M$) unterscheidet, und
        - mindestens zwei richtungsselektiven Ablenkelementen (25.1, 25.2), die den mindestens zwei Abtastteilungen (24.1, 24.2) zugeordnet sind und eine Ablenkung von den durch die verschiedenen Abtastteilungen (24.1, 24.2) tretenden Strahlenbündeln in Richtung eines gemeinsam beaufschlagten Teilbereichs auf der Messteilung (11) bewirken, und
        - mindestens zwei Detektoranordnungen (26.1, 26.2), die in Richtung einer Senkrechten (y) zur Messrichtung (x) benachbart zueinander angeordnet sind und auf die die vom gleichen beaufschlagten Teilbereich auf der Messteilung (11) her einfallenden Strahlenbündel jeweils in Form eines periodischen Vernier-Streifenmusters mit einer Streifenmusterperiodizität (SP) auftreffen und wobei die Detektoranordnungen (26.1, 26.2) jeweils eine Mehrzahl von lichtempfindlichen Detektorelementen (26.1a, 26.1b, 26.1c, 26.1d, 26.2a, 26.2b, 26.2c, 26.2d) umfassen, die periodisch entlang der Messrichtung (x) angeordnet sind, so dass über die Detektoranordnungen (26.1, 26.2) eine Umwandlung der Vernier-Streifenmuster in elektrische Ausgangssignale erfolgt, die zu zwei oder mehr phasenverschobenen Abtastsignalen weiterverarbeitet werden.

2. Optische Positionsmesseinrichtung nach Anspruch 1, wobei

    - die Detektorelemente (26.1a, 26.1b, 26.1c, 26.1d, 26.2a, 26.2b, 26.2c, 26.2d) der Detektoranordnungen (26.1, 26.2) jeweils rechteckförmig ausgebildet sind und die Rechtsecks-Längsachse jeweils parallel zur Senkrechten (y) zur Messrichtung (x) orientiert ist, und
    - die Detektorelemente (26.1a, 26.1b, 26.1c, 26.1d, 26.2a, 26.2b, 26.2c, 26.2d) entlang der Senkrechten (y) zur Messrichtung (x) fluchtend zueinander angeordnet sind.

3. Optische Positionsmesseinrichtung nach Anspruch 2, wobei die jeweils entlang der Senkrechten (y) zur Messrichtung (x) benachbart angeordneten Detektorelemente (26.1a, 26.1b, 26.1c, 26.1d, 26.2a, 26.2b, 26.2c, 26.2d) der beiden Detektoranordnungen (26.1, 26.2) elektrisch miteinander verschaltet sind.

4. Optische Positionsmesseinrichtung nach Anspruch 2, wobei

    - die Abtasteinheit (20) zwei Detektoranordnungen (26.1, 26.2) umfasst, und
    - innerhalb einer Periode des abgetasteten Vernier-Streifenmusters jeweils eine Detektorgruppe mit vier identisch ausgebildeten Detektorelementen (26.1a, 26.1b, 26.1c, 26.1d, 26.2a, 26.2b, 26.2c, 26.2d) entlang der Messrichtung (x) angeordnet ist, wobei entlang der Messrichtung (x) jeweils mehrere Detektorgruppen in jeder Detektoranordnung (26.1, 26.2) angeordnet sind, und

        - wobei die vier Detektorelemente (26.1a, 26.1b, 26.1c, 26.1d) einer Detektorgruppe der ersten Detektoranordnung (26.1) im Fall der Relativbewegung von Maßstab (10) und Abtasteinheit (20) jeweils periodische Ausgangssignale mit den Phasenlagen 180°, 270°, 0°, 90° liefern, und
        - wobei die vier Detektorelemente (26.2a, 26.2b, 26.2c, 26.2d) einer Detektorgruppe der zweiten Detektoranordnung (26.2) im Fall der Relativbewegung von Maßstab (10) und Abtasteinheit (20) jeweils periodische Ausgangssignale mit den Phasenlagen 0°, 90°, 180°, 270° liefern, und

        - zur Gewinnung eines ersten verschiebungsabhängigen Abtastsignals (SIN) die folgenden Detektorelemente (26.1a, 26.1b, 26.1c, 26.1d, 26.2a, 26.2b, 26.2c, 26.2d) benachbarter Detektorgruppen der beiden Detektoranordnungen (26.1, 26.2) elektrisch miteinander verschaltet sind:

drittes Detektorelement (26.1c) der ersten Detektoranordnung (26.1),
erstes Detektorelement (26.2a) der zweiten Detektoranordnung (26.2),
erstes Detektorelement (26.1a) der ersten Detektoranordnung (26.1),
drittes Detektorelement (26.2c) der zweiten Detektoranordnung (26.2), und

- zur Gewinnung eines zweiten verschiebungsabhängigen Abtastsignals (COS), das um 90° gegenüber dem ersten Abtastsignal phasenverschoben ist, die folgenden Detektorelemente (26.1a, 26.1b, 26.1c, 26.1d, 26.2a, 26.2b, 26.2c, 26.2d) benachbarter Detektorgruppen der beiden Detektoranordnungen (26.1, 26.2) elektrisch miteinander verschaltet sind:

viertes Detektorelement (26.1d) der ersten Detektoranordnung (26.1),
zweites Detektorelement (26.2b) der zweiten Detektoranordnung (26.2),
zweites Detektorelement (26.1b) der ersten Detektoranordnung (26.1),
viertes Detektorelement (26.2d) der zweiten Detektoranordnung (26.2).

5. Optische Positionsmesseinrichtung nach mindestens einem der vorhergehenden Ansprüche, wobei die Abtastteilungen (24.1, 24.2) jeweils als gemischte Amplituden-Phasen-Gitter ausgebildet sind, die aus in Messrichtung (x) alternierend angeordneten periodischen Amplituden- und Phasenstrukturen bestehen und auf der dem Maßstab (10) zugewandten Seite der Abtastplatte (23) angeordnet sind.

6. Optische Positionsmesseinrichtung nach Anspruch 5,

- wobei die Amplitudenstrukturen durchlässige und undurchlässige Teilungsbereiche (24.1c, 24.1b) umfassen, und
- wobei die Phasenstrukturen jeweils identisch ausgebildete, durchlässige Teilungsbereiche (24.1a) mit einer phasenschiebenden optischen Wirkung umfassen.

7. Optische Positionsmesseinrichtung nach Anspruch 6, wobei

- die Abtastteilungen jeweils aus einer Mehrzahl von entlang der Messrichtung (x) periodisch mit der Abtastteilungsperiodizität (TP$_A$) angeordneten Abtastteilungs-Elementarzellen bestehen, und
- eine Abtastteilungs-Elementarzelle entlang der Messrichtung (x) einen ersten undurchlässigen Teilungsbereich (24.1b), einen durchlässigen Teilungsbereich (24.1c), einen zweiten undurchlässigen Teilungsbereich (24.1b) sowie einen phasenschiebenden Teilungsbereich (24.1a) umfasst, und
- benachbarte undurchlässige Teilungsbereiche (24.1b) im Abstand der halben Abtastteilungsperiodizität (TP$_A$/2) und benachbarte durchlässige Teilungsbereiche (24.1c) sowie benachbarte phasenschiebende Teilungsbereiche (24.1a) im Abstand der Abtastteilungsperiodizität (TP$_A$) zueinander angeordnet sind.

8. Optische Positionsmesseinrichtung nach Anspruch 5, wobei die Abtastteilungsperiodizität (TP$_A$) jeweils gemäß

$$TP_A = 2 \,/\, (1/TP_M +/- 1/SP)$$

gewählt ist, mit

TP$_A$ := Abtastteilungsperiodizität
TP$_M$ := Messteilungsperiodizität
SP := Streifenmusterperiodizität

9. Optische Positionsmesseinrichtung nach mindestens einem der vorhergehenden Ansprüche, wobei

- die Abtastteilungen (24.1, 24.2) jeweils identisch ausgebildet sind, und
- die Abtastteilungen (24.1, 24.2) entlang einer Senkrechten (y) zur Messrichtung (x) benachbart zueinander auf der Abtastplatte (23) angeordnet sind, und
- benachbarte Abtastteilungen (24.1, 24.2) entlang der Messrichtung (x) um den Versatzbetrag TP$_A$/2 oder TP$_A$/4 versetzt zueinander auf der Abtastplatte (23) angeordnet sind, wobei TP$_A$ die Abtastteilungsperiodizität angibt.

10. Optische Positionsmesseinrichtung nach mindestens einem der vorhergehenden Ansprüche, wobei die richtungsselektiven Ablenkelemente (25.1, 25.2) in der Abtasteinheit (20) im Bereich zwischen der Lichtquelle (21) und der Abtastplatte (23) angeordnet sind.

11. Optische Positionsmesseinrichtung nach Anspruch 10, wobei die richtungsselektiven Ablenkelemente (25.1, 25.2) auf der der Lichtquelle (21) zugewandten Seite der Abtastplatte (23) angeordnet und als mehrstufige, geblazte Phasengitter ausgebildet sind.

**12.** Optische Positionsmesseinrichtung nach Anspruch 11,

- wobei als richtungsselektive Ablenkelemente (25.1, 25.2) zwei Phasengitter jeweils als vierstufige geblazte Phasengitter ausgebildet und entlang einer Senkrechten (y) zur Messrichtung (x) benachbart zueinander auf der Abtastplatte (23) angeordnet sind und zwischen denen sich ein absorbierender Teilbereich (27) auf der Abtastplatte (23) befindet, und
- wobei die beiden Phasengitter eine entgegengesetzte Orientierung des stufenförmigen Profilverlaufs zueinander aufweisen.

**13.** Optische Positionsmesseinrichtung nach Anspruch 10, wobei die richtungsselektiven Ablenkelemente

- als refraktive Prismenkeile ausgebildet sind, oder
- als Mehrsegmentlinse ausgebildet sind, deren Segmente zueinander geneigte optische Achsen aufweisen.

**Claims**

**1.** Optical position measurement device for capturing the position of two objects that are arranged to be movable relative to one another along a measurement direction (x), comprising

- a measurement scale (10) that is connected to one of the two objects and has, extending along the measurement direction (x), a measurement graduation (11) with a specific measurement graduation periodicity ($TP_M$), and
- a scanning unit (20) connected to the other object, comprising

- at least one light source (21),
- at least one scanning plate (23) with at least two scan graduations (24.1, 24.2), which are arranged adjacent to one another on one side of the scanning plate (23) perpendicularly to the measurement direction (x) and each have a specific scan graduation periodicity ($TP_A$), which differs from the measurement graduation periodicity ($TP_M$), and
- at least two direction-selective deflection elements (25.1, 25.2), which are assigned to the at least two scan graduations (24.1, 24.2) and effect deflection of the beams passing through the various scan graduations (24.1, 24.2) in the direction of a partial region on the measurement graduation (11), with the partial region being jointly impinged upon, and
- at least two detector arrangements (26.1, 26.2), which are arranged adjacent to one another in the direction of a perpendicular (y) to the measurement direction (x) and on which the beams that are incident from the same impinged-upon partial region on the measurement graduation (11) are incident in each case in the form of a periodic Vernier stripe pattern with a stripe pattern periodicity (SP) and wherein the detector arrangements (26.1, 26.2) each comprise a plurality of light-sensitive detector elements (26.1a, 26.1b, 26.1c, 26.1d, 26.2a, 26.2b, 26.2c, 26.2d) which are arranged periodically along the measurement direction (x), with the result that the Vernier stripe patterns are converted via the detector arrangements (26.1, 26.2) into electrical output signals that are processed further to two or more phase-shifted scanning signals.

**2.** Optical position measurement device according to Claim 1, wherein

- the detector elements (26.1a, 26.1b, 26.1c, 26.1d, 26.2a, 26.2b, 26.2c, 26.2d) of the detector arrangements (26.1, 26.2) are each embodied in the shape of rectangles and the rectangle longitudinal axis is in each case oriented parallel to the perpendicular (y) to the measurement direction (x), and
- the detector elements (26.1a, 26.1b, 26.1c, 26.1d, 26.2a, 26.2b, 26.2c, 26.2d) along the perpendicular (y) to the measurement direction (x) are arranged flush with one another.

**3.** Optical position measurement device according to Claim 2, wherein the detector elements (26.1a, 26.1b, 26.1c, 26.1d, 26.2a, 26.2b, 26.2c, 26.2d) of the two detector arrangements (26.1, 26.2), which are arranged adjacent to one another in each case along the perpendicular (y) to the measurement direction (x), are electrically interconnected.

**4.** Optical position measurement device according to Claim 2, wherein

- the scanning unit (20) comprises two detector arrangements (26.1, 26.2), and,
- within one period of the scanned Vernier stripe pattern, a detector group with four identically embodied detector elements (26.1a, 26.1b, 26.1c, 26.1d, 26.2a, 26.2b, 26.2c, 26.2d) is arranged in each case along the measurement direction (x), wherein in each case a plurality of detector groups in each detector arrangement (26.1, 26.2) are arranged along the measurement direction (x), and

- wherein the four detector elements (26.1a, 26.1b, 26.1c, 26.1d) of a detector group of the first detector arrangement (26.1) each provide periodic output signals with the phase shifts 180°, 270°, 0°, 90° in the event of the relative movement between the measurement scale (10) and the scanning unit (20), and
- wherein the four detector elements (26.2a, 26.2b, 26.2c, 26.2d) of a detector group of the second detector arrangement (26.2) each provide periodic output signals with the phase shifts 0°, 90°, 180°, 270° in the event of the relative movement between the measurement scale (10) and the scanning unit (20), and
- the following detector elements (26.1a, 26.1b, 26.1c, 26.1d, 26.2a, 26.2b, 26.2c, 26.2d) of adjacent detector groups of the two detector arrangements (26.1, 26.2) are electrically interconnected to obtain a first shift-dependent scan signal (SIN):

> third detector element (26.1c) of the first detector arrangement (26.1),
> first detector element (26.2a) of the second detector arrangement (26.2),
> first detector element (26.1a) of the first detector arrangement (26.1),
> third detector element (26.2c) of the second detector arrangement (26.2), and

- the following detector elements (26.1a, 26.1b, 26.1c, 26.1d, 26.2a, 26.2b, 26.2c, 26.2d) of adjacent detector groups of the two detector arrangements (26.1, 26.2) are electrically interconnected to obtain a second shift-dependent scan signal (COS) which is phase-shifted by 90° with respect to the first scan signal:

> fourth detector element (26.1d) of the first detector arrangement (26.1),
> second detector element (26.2b) of the second detector arrangement (26.2),
> seconded detector element (26.1b) of the first detector arrangement (26.1),
> fourth detector element (26.2d) of the second detector arrangement (26.2).

**5.** Optical position measurement device according to at least one of the preceding claims, wherein the scan graduations (24.1, 24.2) are each embodied as mixed amplitude-phase gratings which each consist of periodic amplitude and phase structures arranged in alternation in the measurement direction (x) and are arranged on the side of the scanning plate (23) facing the measurement scale (10).

**6.** Optical position measurement device according to Claim 5,

> - wherein the amplitude structures comprise transmissive and opaque graduation regions (24.1c, 24.1b), and
> - wherein the phase structures each comprise identically embodied transmissive graduation regions (24.1a) with a phase-shifting optical effect.

**7.** Optical position measurement device according to Claim 6, wherein

> - the scan graduations each consist of a plurality of scan graduation unit cells arranged periodically with the scan graduation periodicity ($TP_A$) along the measurement direction (x), and
> - a scan graduation unit cell comprises along the measurement direction (x) a first opaque graduation region (24.1b), a transmissive graduation region (24.1c), a second opaque graduation region (24.1b) and a phase-shifting graduation region (24.1a), and
> - adjacent opaque graduation regions (24.1b) are arranged at a distance of half the scan graduation periodicity ($TP_A/2$) from one another and adjacent transmissive graduation regions (24.1c) and also adjacent phase-shifting graduation regions (24.1a) are arranged at a distance of the scan graduation periodicity ($TP_A$) from one another.

**8.** Optical position measurement device according to Claim 5, wherein the scan graduation periodicity ($TP_A$) is in each case selected according to

$$TP_A = 2/(1/TP_M +/- 1/SP),$$

with

> $TP_A$ := scan graduation periodicity
> $TP_M$ := measurement graduation periodicity
> SP := stripe pattern periodicity.

**9.** Optical position measurement device according to at least one of the preceding claims, wherein

> - the scan graduations (24.1, 24.2) are each embodied identically, and
> - the scan graduations (24.1, 24.2) are arranged adjacent to one another on the scanning plate (23) along a perpendicular (y) to the measurement direction (x), and
> - adjacent scan graduations (24.1, 24.2) are arranged on the scanning plate (23) along the measurement direction (x) offset from one another by the offset amount $TP_A/2$ or $TP_A/4$,

wherein $TP_A$ indicates the scan graduation periodicity.

10. Optical position measurement device according to at least one of the preceding claims, wherein the direction-selective deflection elements (25.1, 25.2) are arranged in the scanning unit (20) in the region between the light source (21) and the scanning plate (23).

11. Optical position measurement device according to Claim 10, wherein the direction-selective deflection elements (25.1, 25.2) are arranged on the side of the scanning plate (23) facing the light source (21) and are embodied as multi-level blazed phase gratings.

12. Optical position measurement device according to Claim 11,

- wherein, as direction-selective deflection elements (25.1, 25.2), two phase gratings are embodied in each case as four-level blazed phase gratings and are arranged adjacent to one another on the scanning plate (23) along a perpendicular (y) to the measurement direction (x) and between which an absorbing partial region (27) is disposed on the scanning plate (23), and
- wherein the two phase gratings have an opposite orientation of the level-type profile curve with respect to each other.

13. Optical position measurement device according to Claim 10, wherein the direction-selective deflection elements

- are embodied as refractive prism wedges, or
- are embodied as multi-segment lens whose segments have optical axes that are inclined with respect to one another.

**Revendications**

1. Dispositif optique de mesure de la position permettant de détecter la position de deux objets qui sont disposés de manière mobile l'un par rapport à l'autre le long d'une direction de mesure (x), comprenant

- une échelle graduée (10) qui est reliée à l'un des deux objets et présente une graduation de mesure (11) s'étendant le long de la direction de mesure (x) et présentant une périodicité de graduation de mesure ($TP_M$) déterminée, et
- une unité de balayage (20) reliée à l'autre objet, comprenant

  - au moins une source de lumière (21),

- au moins un réticule de balayage (23) pourvu d'au moins deux graduations de balayage (24.1, 24.2) qui sont disposées perpendiculairement à la direction de mesure (x) de manière adjacente l'une à l'autre sur un côté du réticule de balayage (23) et présentent respectivement une périodicité de graduation de balayage ($TP_A$) déterminée qui est différente de la périodicité de graduation de mesure ($TP_M$), et
- au moins deux éléments de déviation à sélectivité directionnelle (25.1, 25.2) qui sont associés auxdites au moins deux graduations de balayage (24.1, 24.2) et provoquent une déviation des faisceaux de rayons traversant les différentes graduations de balayage (24.1, 24.2) en direction d'une zone partielle sollicitée en commun sur la graduation de mesure (11), et
- au moins deux agencements de détection (26.1, 26.2) qui sont disposés de manière adjacente l'un à l'autre en direction d'une normale (y) à la direction de mesure (x) et sur lesquels les faisceaux de rayons incidents à partir de la même zone partielle sollicitée sur la graduation de mesure (11) sont incidents respectivement sous la forme d'un motif de frange de vernier ayant une périodicité de motif de frange (SP), et dans lequel les agencements de détection (26.1, 26.2) comprennent respectivement une pluralité d'éléments de détection photosensibles (26.1a, 26.1b, 26.1c, 26.1d, 26.2a, 26.2b, 26.2c, 26.2d) qui sont disposés de manière périodique le long de la direction de mesure (x) de sorte que par l'intermédiaire des agencements de détection (26.1, 26.2) une conversion des motifs de frange de vernier est effectuée en signaux de sortie électriques qui sont transformés en deux ou plusieurs signaux de balayage déphasés.

2. Dispositif optique de mesure de la position selon la revendication 1, dans lequel

- les éléments de détection (26.1a, 26.1b, 26.1c, 26.1d, 26.2a, 26.2b, 26.2c, 26.2d) des agencements de détection (26.1, 26.2) sont respectivement réalisés en forme de rectangle, et l'axe longitudinal du rectangle est respectivement orienté en parallèle à la normale (y) à la direction de mesure (x), et
- les éléments de détection (26.1a, 26.1b, 26.1c, 26.1d, 26.2a, 26.2b, 26.2c, 26.2d) sont disposés en alignement les uns par rapport aux autres le long de la normale (y) à la direction de mesure (x).

**3.** Dispositif optique de mesure de la position selon la revendication 2, dans lequel les éléments de détection (26.1a, 26.1b, 26.1c, 26.1d, 26.2a, 26.2b, 26.2c, 26.2d) des deux agencements de détection (26.1, 26.2), disposés de manière adjacente respectivement le long de la normale (y) à la direction de mesure (x), sont électriquement interconnectés les uns avec les autres.

**4.** Dispositif optique de mesure de la position selon la revendication 2, dans lequel

- l'unité de balayage (20) comprend deux agencements de détection (26.1, 26.2), et
- à l'intérieur d'une période du motif de frange de vernier balayé, respectivement un groupe de détecteurs avec quatre éléments de détection (26.1a, 26.1b, 26.1c, 26.1d, 26.2a, 26.2b, 26.2c, 26.2d), réalisés de manière identique, est disposé le long de la direction de mesure (x), dans lequel le long de la direction de mesure (x) respectivement plusieurs groupes de détecteurs sont disposés dans chaque agencement de détection (26.1, 26.2), et
- dans lequel, dans le cas du mouvement relatif de l'échelle graduée (10) et de l'unité de balayage (20), les quatre éléments de détection (26.1a, 26.1b, 26.1c, 26.1d) d'un groupe de détecteurs du premier agencement de détection (26.1) fournissent respectivement des signaux de sortie périodiques avec les positions de phase 180°, 270°, 0°, 90°, et
- dans lequel, dans le cas du mouvement relatif de l'échelle graduée (10) et de l'unité de balayage (20), les quatre éléments de détection (26.2a, 26.2b, 26.2c, 26.2d) d'un groupe de détecteurs du deuxième agencement de détection (26.2) fournissent respectivement des signaux de sortie périodiques avec les positions de phase 0°, 90°, 180°, 270°, et
- pour obtenir un premier signal de balayage (SIN) dépendant du décalage, les éléments de détection (26.1a, 26.1b, 26.1c, 26.1d, 26.2a, 26.2b, 26.2c, 26.2d) suivants de groupes de détecteurs adjacents des deux agencements de détection (26.1, 26.2) sont électriquement interconnectés les uns avec les autres :

le troisième élément de détection (26.1c) du premier agencement de détection (26.1), le premier élément de détection (26.2a) du deuxième agencement de détection (26.2), le premier élément de détection (26.1a) du premier agencement de détection (26.1), le troisième élément de détection (26.2c) du deuxième agencement de détection (26.2), et

- pour obtenir un deuxième signal de balayage (COS) dépendant du décalage, qui est déphasé de 90° par rapport au premier signal de balayage, les éléments de détection (26.1a, 26.1b, 26.1c, 26.1d, 26.2a, 26.2b, 26.2c, 26.2d) suivants de groupes de détecteurs adjacents des deux agencements de détection (26.1, 26.2) sont électriquement interconnectés les uns avec les autres :

le quatrième élément de détection (26.1d) du premier agencement de détection (26.1), le deuxième élément de détection (26.2b) du deuxième agencement de détection (26.2), le deuxième élément de détection (26.1b) du premier agencement de détection (26.1), le quatrième élément de détection (26.2d) du deuxième agencement de détection (26.2).

**5.** Dispositif optique de mesure de la position selon au moins l'une des revendications précédentes, dans lequel les graduations de balayage (24.1, 24.2) sont respectivement réalisées sous la forme de réseaux d'amplitude/phase mixtes qui sont composés de structures d'amplitude et de phase périodiques disposées en alternance dans la direction de mesure (x) et disposées sur la face du réticule de balayage (23) tournée vers l'échelle graduée (10).

**6.** Dispositif optique de mesure de la position selon la revendication 5,

- dans lequel les structures d'amplitude comprennent des zones de graduation transparentes et opaques (24.1c, 24.1b), et
- dans lequel les structures de phase comprennent respectivement des zones de graduation transparentes (24.1a) réalisées de manière identique avec un effet optique de décalage de phase.

**7.** Dispositif optique de mesure de la position selon la revendication 6, dans lequel

- les graduations de balayage sont composées respectivement d'une pluralité de cellules élémentaires de graduation de balayage disposées périodiquement le long de la direction de mesure (x) avec la périodicité de graduation de balayage (TP$_A$), et
- une cellule élémentaire de graduation de balayage comprend le long de la direction de mesure (x) une première zone de graduation opaque (24.1b), une zone de graduation transparente (24.1c), une deuxième zone de graduation opaque (24.1b) ainsi qu'une zone de graduation à décalage de phase (24.1a), et
- des zones de graduation opaques (24.1b) adjacentes sont disposées les unes par rapport aux autres à la distance de la moitié de la périodicité de graduation de balayage (TP$_A$/2), et des zones de graduation transparentes (24.1c) adjacentes ainsi que des zones de graduation (24.1a) à décalage de phase adjacentes sont disposées les unes par rapport aux autres à la distance de la périodicité de graduation de balayage (TP$_A$).

8. Dispositif optique de mesure de la position selon la revendication 5, dans lequel la périodicité de graduation de balayage (TP$_A$) est respectivement sélectionnée selon

$$TP_A = 2/(1/TP_M +/- 1/SP),$$

où

TP$_A$ := périodicité de graduation de balayage
TP$_M$ := périodicité de graduation de mesure
SP := périodicité de motif de frange

9. Dispositif optique de mesure de la position selon au moins l'une des revendications précédentes, dans lequel

- les graduations de balayage (24.1, 24.2) sont réalisées respectivement de manière identique, et
- les graduations de balayage (24.1, 24.2) sont disposées sur le réticule de balayage (23) de manière adjacente les unes par rapport aux autres le long d'une normale (y) à la direction de mesure (x), et
- des graduations de balayage (24.1, 24.2) adjacentes sont disposées le long de la direction de mesure (x) de manière décalée les unes par rapport aux autres de la valeur de décalage TP$_A$/2 ou TP$_A$/4 sur le réticule de balayage (23), où TP$_A$ indique la périodicité de graduation de balayage.

10. Dispositif optique de mesure de la position selon au moins l'une des revendications précédentes, dans lequel les éléments de déviation à sélectivité directionnelle (25.1, 25.2) sont disposés dans l'unité de balayage (20) dans la zone entre la source de lumière (21) et le réticule de balayage (23).

11. Dispositif optique de mesure de la position selon la revendication 10, dans lequel les éléments de déviation à sélectivité directionnelle (25.1, 25.2) sont disposés sur la face du réticule de balayage (23) tournée vers la source de lumière (21) et sont réalisés sous forme de réseaux de phase blazés à plusieurs niveaux.

12. Dispositif optique de mesure de la position selon la revendication 11,

- dans lequel comme éléments de déviation à sélectivité directionnelle (25.1, 25.2), deux réseaux de phase sont réalisés respectivement sous forme de réseaux de phase blazés à quatre niveaux et sont disposés sur le réticule de balayage (23) le long d'une normale (y) à la direction de mesure (x) de façon adjacente l'un par rapport à l'autre et entre lesquels se trouve une zone partielle absorbante (27) sur le réticule de balayage (23), et
- dans lequel les deux réseaux de phase présentent l'un par rapport à l'autre une orientation opposée de la courbe de profil échelonnée.

13. Dispositif optique de mesure de la position selon la revendication 10, dans lequel les éléments de déviation à sélectivité directionnelle

- sont réalisés sous forme de coins prismatiques réfractifs, ou
- sont réalisés sous forme de lentille à plusieurs segments dont les segments présentent des axes optiques inclinés les uns par rapport aux autres.

FIG. 1

EP 3 936 830 B1

## FIG. 2

## FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 767359 A1
- EP 1081457 A2